# EUROPEAN PATENT APPLICATION

(11) **EP 2 009 846 A1**
(43) Date of publication of application: **31.12.2008**
(21) Application number: 07721786.7
(22) Date of filing: 25.06.2007
(51) Int. Cl.: H04L 12/28, H04L 29/06, H04Q 7/28

(54) **METHOD, SYSTEM AND DEVICE FOR ESTABLISHING GROUP SESSION**

(30) Priority: 28.06.2006 CN 200610061393
(71) Applicant: Huawei Technologies Co., Ltd., Longgang District Shenzhen, Guangdong Province, 518129 (CN)
(72) Inventor: SONG, Xuefei, Shenzhen, Guangdong Province 518129 (CN); SUN, Qian, Shenzhen, Guangdong Province 518129 (CN); PENG, Chenghui, Shenzhen, Guangdong Province 518129 (CN); ZHAO, Yang, Shenzhen, Guangdong Province 518129 (CN); BAO, Hongqing, Shenzhen, Guangdong Province 518129 (CN); TIAN, Linyi, Shenzhen, Guangdong Province 518129 (CN)
(74) Representative: Pfenning, Meinig & Partner GbR
(86) International application number: PCT/CN2007/070170
(87) International publication number: WO 2008/003251

(57) **Abstract**

A method and system for establishing a group session and a service server are disclosed. The method comprises: acquiring a group member list and establishing session conditions according to the information in a received group session; acquiring the various information described in the establishing session conditions; determining group members of which the various information meets the establishing session conditions; and sending a request for establishing a group session of which the various information meets the establishing session conditions, and establishing the group session. The method solves the problem that the service server cannot dynamically select the group members according to the current statuses of the group members to establish the session in the prior art, whose disadvantages are the session is inflexible and the communication resources are wasted.

## Description

This application claims priority to Chinese Patent Application No. 200610061393.2, entitled "Method and System for Establishing Group Session" and filed with the Chinese Patent Office on June 28, 2006, which is hereby incorporated by reference in its entirety.

### Field of the Invention

The present invention relates to communication technologies, and in particular to a method, system and device for establishing a group session.

### Background of the Invention

Instant Message (IM) and Push to Talk over Cellular (PoC) systems are widely used communication systems at present, and both of the systems have functions of presetting system and enabling a user to create a group, so that the user may classify contacts. For example, a chat group in the MSN Messenger, QQ and ICQ, a predefined group and a chat group in the PoC, etc., are typical instances of group applications.

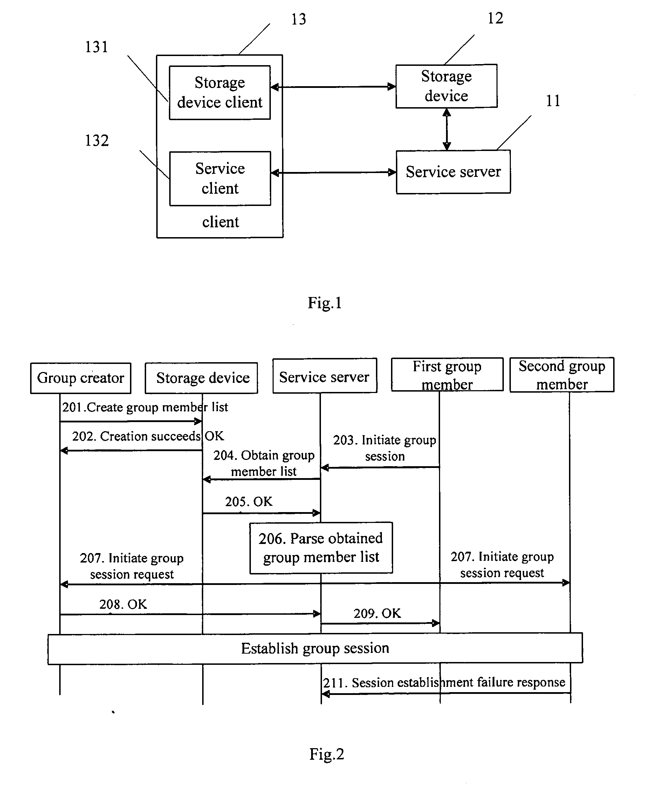

A system for implementing a static group in the prior art is illustrated in Figure 1. In Figure 1, a service server 11 is adapted to provide network functions of application layer for a service, and may execute a control function and a participation function. Both a PoC service server and an IM service server are typical instances of implementing the above mentioned functions of the service server. A storage device 12 is adapted to store service-related files and data, which may include public information common to a plurality of services. The storage device 12 also manages the service files and data. Ordinary storage devices include a data base, an Extensible Markup Language (XML) document management server, etc. The client 13 includes two modules of a storage device client 131 and a service client 132. The storage device client 131 is a client adapted to manage the files and data stored in a network, and has functions of creating or replacing a file or data, deleting a file or data, obtaining a file or data, etc. The service client 132 supports service-related functions. For example, if the service server is a PoC server or an IM server, the service client has functions of initiating, participating in and terminating a session, receiving and sending an instant message notification, etc.

Currently, statistic group information is stored at the storage device 12, and a group information file contains only a group member list, i.e., a set of group member identifiers. The group member list in an XML manner may be as follows:

```
        <list-service uri="friend@example.com">
        <display-name>myfriend</display-name>
          <list>
                   <entry uri=groupmemberl@example.com/>
                   <entry uri=groupmember2@example.com/>
                   <entry uri=groupcreator@example.com/>
          </list>
          <list-service>
```

The element <list-service> is a root element of the group information file and indicates that the file describes a group, and an attribute uri is used to indicate the identifier of the group; the element <display-name> indicates the name of the group; and the element <list> indicates the group member list and contains one or more sub-elements <entry>. Each element <entry> indicates a group member and has an attribute uri for identifying the group member.

Upon receiving a group session request initiated from a group member, the service server 11 obtains the group member list from the storage device 12 and then initiates a group session request to each of the group members in the group based on the group member list, and a group session is established successfully once a group member responds to the group session request.

A specific procedure of creating a group and establishing a group session in the prior art is illustrated in Figure 2.

Step 201: A group creator creates a group member list through a storage device client and stores the list on a corresponding storage device.

Step 202: If the group member list is stored successfully, the storage device returns an OK response; otherwise, the storage device returns a failure response.

Step 203: The group creator or an authorized user in the group initiates a group session request containing the identifier of the group to the service server through the service client.

Step 204: The service server initiates a request for obtaining the group member list to the storage device according to the information in the group session request, for example, the identifier of the group.

Step 205: If the group member list is obtained successfully, the storage device returns an OK response to the service server and sends to the service server the group member list requested for by the service server.

Step 206: The service server parses the obtained group member list.

Step 207: The service server initiates a group session request to each of the group members in the group member list according to the parsing result.

Step 208: The group creator agrees on participation in the group session and returns an OK response to the service server.

Step 209: The service server sends a success response to the group session initiator (for example, the group member 1) upon receiving the success response from the group creator.

Step 210: The group session is established successfully.

Step 211: A group member (for example, the group member 2) that cannot participate in the group session due to some reason (for example, due to the fact that the user terminal is powered off) rejects the session request.

However, groups used in IM and PoC communication systems are static groups, in other words, a creator has to define a definite group member list before establishing a group session, and upon the establishment of the group session, the service server initiates a group session establishment request to all of the members in the group according to member identifiers in the group member list, which undoubtedly results in a waste of communication resources for those members unable to establish any group session currently.

### Summary of the Invention

An embodiment of the present invention provides a method for establishing a group session to select an eligible member for establishing a group session, thereby saving communication resources.

An embodiment of the present invention further provides a system for establishing a group session to select an eligible member for establishing a group session, thereby saving communication resources.

An embodiment of the present invention further provides a service server to select eligible partial members for establishing a group session, thereby saving communication resources.

An embodiment of the present invention provides a method for establishing a group session, including:
obtaining a group member list and session establishment conditions according to information in a received group session request;
obtaining information indicated by session establishment conditions of individual group members in the group member list;
determining a group member of which the obtained information satisfies the session establishment conditions; and
initiating a group session establishment request to the group member of which the obtained information satisfies the session establishment conditions, and establishing a group session.

An embodiment of the present invention further provides a system for establishing a group session, including: a storage device, a service server and a condition determining device. The storage device is adapted to store a group member list and session establishment conditions; the service server is adapted to receive a group session establishment request, obtain the group member list and the session establishment conditions from the storage device according to the session request, and establish a group session for a group member satisfying the session establishment conditions according to a determination result on the relevant information of the group member sent by the condition determining device; and the condition determining device is adapted to obtain information (including static information and/or dynamic information) indicated by session establishment conditions of the group member according to the session establishment conditions, determine whether the information of the group member satisfies the session establishment conditions, and return a determination result to the service server.

An embodiment of the present invention further provides a service server, including:
a receiving unit adapted to receive a group session request including a group identifier;
a group member obtaining unit adapted to obtain a group member list according to the group identifier;
a group session establishing unit adapted to initiate a group session establishment request to a group member and establish a group session;
a session condition obtaining unit adapted to obtain session establishment conditions corresponding to group members in the group member list; and
a group member information obtaining unit adapted to obtain information indicated by the session establishment conditions of the group members in the group member list.

In the embodiments of the present invention, the group creator presets the session establishment conditions, and the service server compares the relevant information of the group members with the session establishment conditions and initiates the group session request to only those group members satisfying the session establishment conditions to invite the group members to the group session, so that the load in the server is reduced, the network traffic is decreased, the flexibility of the group session is improved, and hence communication resources are saved.

### Brief Description of the Drawings

Figure 1 is a schematic diagram of a system for establishing a group session in the prior art;

Figure 2 is a flow diagram of establishing a group session in the prior art;

Figure 3 is a flow diagram of establishing a group session according to an embodiment of the present invention;

Figure 4 is a schematic diagram illustrating a system for establishing a group session according to an embodiment of the present invention;

Figure 5 is another flow diagram of establishing a group session according to an embodiment of the present invention;

Figure 6 is a flow diagram in which a service server determines whether to add a group member into a group session in accordance with the obtained relevant information of the group member according to an embodiment of the present invention;

Figure 7 is a flow diagram in which a service server deals with a change on status information of a group member according to an embodiment of the present invention; and

Figure 8 is a principle block diagram of a service server according to an embodiment of the present invention.

### Detailed Description of the Embodiments

The present invention is further described in details below with reference to the accompanying drawings.

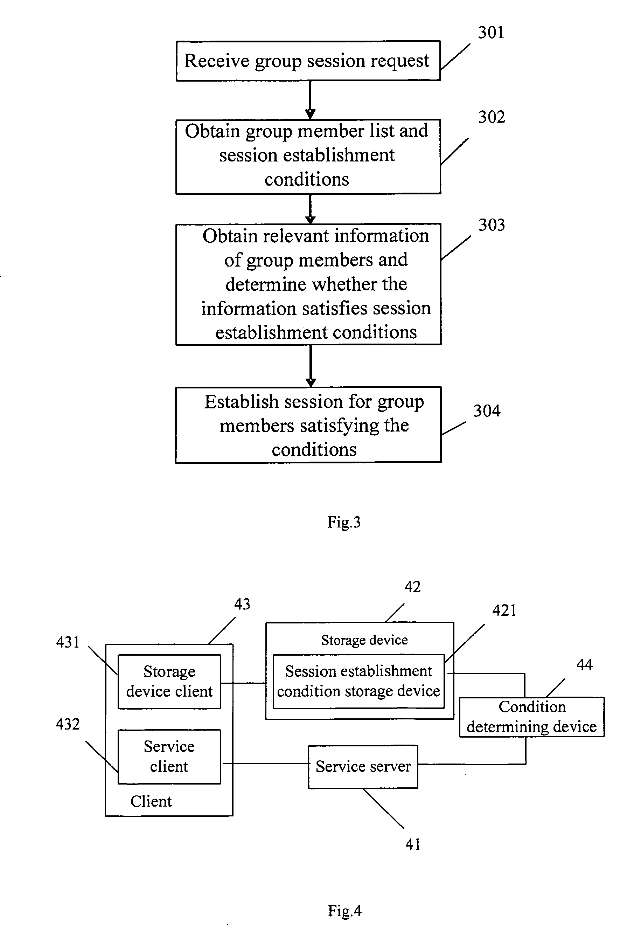

As shown in Figure 3, a flow of establishing a group session according to an embodiment of the present invention is illustrated.

Step 301: A group creator or an authorized member in a group initiates a group session request containing the identifier of the group to a service server through a client.

Step 302: The service server obtains a group member list and session establishment conditions according to the information in the group session request, i.e., the identifier of the group.

The group member list and session establishment conditions may be stored in a pre-created group member information file. The group member information file may be queried for according to the identifier of the group in the group session request, and the group member list and the session establishment conditions may be obtained directly from the group member information file.

Alternatively, the group member list and the session establishment conditions may be stored separately in different files. For example, the group member list may be stored in the group member information file, in addition, a reference to the session establishment conditions corresponding to the group members is stored, so that during the query, the group member information file is queried for according to the identifier of the group in the group session request to obtain the group member list, and then corresponding files are searched for according to the reference to the session establishment conditions in the group member list to obtain the session establishment conditions corresponding to the individual group members.

Step 303: The service server obtains relevant information indicated by the session establishment conditions of the group members, and determines whether the relevant information satisfies the session establishment conditions.

The relevant information herein includes static information and/or dynamic information, which is indicated by the session establishment conditions of the group members and may be obtained in numerous approaches. For example, the static information may be obtained via a query; and the dynamic information may be obtained via a subscription-and-notification manner.

Step 304: The service server initiates a group session establishment request to a client of the group member satisfying the session establishment conditions and establishes a group session.

In the above Step 304, the relevant information of the group members in the group member list may be checked sequentially to determine whether the relevant information satisfies the session establishment conditions, and determination results are recorded; after all the group members have been checked, a group session establishment request is initiated to the client of each group member satisfying the session establishment conditions and a group session is established. Alternatively, the relevant information of each group member in the group member list may be checked sequentially to determine whether this group member satisfies the session establishment conditions, and a determination result is recorded; after each check is finished, if a group member satisfies the session establishment conditions, a group session establishment request is initiated to the client of this group member and a group session is established, and subsequently the next group member is checked similarly.

Furthermore, according to an embodiment of the present invention, a system for establishing a group session is further provided. As illustrated in Figure 4, the system includes a storage device 42, a service server 41 and a condition determining device 44.

The storage device 42 is adapted to store service-related files and data, such as a created group member list, session establishment conditions and public information common to a plurality of services, receive a request from the service server 41 and provide the service server 41 with relevant information, such as the created group member list and the session establishment conditions. The session establishment conditions may exist as part of the group member list or a separate file. When the session establishment conditions exist as a separate file, a reference to the file of the session establishment conditions is required in the group member list. Furthermore, when the session establishment conditions exist as a separate file, the storage device further includes a session establishment condition storage device 421 adapted to store conditions for establishing a group session and provide the session establishment conditions for the service server upon receiving a request from the service server. Varying with the forms of the session establishment conditions, the session establishment condition storage device 421 may be implemented with an XML Document Management Server (XDMS) or a database.

Furthermore, the session establishment condition storage device 421 may alternatively be separate from the storage device 42, in this case, the session establishment condition storage device 421 is adapted to receive a request from the service server 41, send session establishment conditions to the service server 41 and store the session establishment conditions upon the request of the storage device 42 in the case that the group member list contains a reference to the session establishment conditions. The condition determining device 44 is adapted to obtain relevant information of the group members from the group member list and the session establishment conditions (when the group member list contains the session establishment conditions) or from the group member list (when the group member list contains no session establishment condition) sent from the service server 41, parse the obtained relevant information of the group members, determine whether group members comply with the session establishment conditions and return a determination result to the service server 41. The condition determining device complies with the XML Configuration Access Protocol (XCAP) and the Session Initiation Protocol (SIP), and may be implemented as an internal device of the service server 41 or the storage device 42, or a separate application server.

The service server 41 is adapted to receive a group session establishment request, obtain the group member list and the session establishment conditions through the storage device 42 according to the request, transfer the group member list and the session establishment conditions to the condition determining device 44, receive a determination result from the condition determining device 44 and establish a group session according to the determination result.

The service-related files and data may be stored in the storage device 42 in advance. Alternatively, a client 43 may be provided in the system, and the group member list and the session establishment conditions is sent to the storage device 42 by the client 43. As illustrated in Figure 4, the client 43 includes a service client 432 and a storage device client 431. The service client 432 is adapted to send a group session establishment request to the service server 41 and execute operations of group session. The storage device client 431 is adapted to manage the files and data stored in the storage device 42, such as the created group member list and the session establishment conditions, and send the group member list and the session establishment conditions to the storage device 42.

With the system according to the embodiment of the present invention, the service server is allowed to initiate the group session request to those group members satisfying session establishment conditions to invite the group members to join the group session, so that the load in the server is reduced, the network traffic is decreased, the flexibility of the group session is improved, and hence the communication resources are saved.

Furthermore, the service server according to an embodiment of the present invention may obtain changes on status information of a group member during the session, thereby determining from the changed information of the group member whether this group member satisfies or still satisfies the session establishment conditions, thus determining whether to allow the group member to join the group session or expel the group member from the group session, so as to dynamically control the group session. Therefore, the lack of dynamic control on a group session in the prior art is avoided.

The method according to an embodiment of the present invention is described in details below based upon the system illustrated in Figure 4.

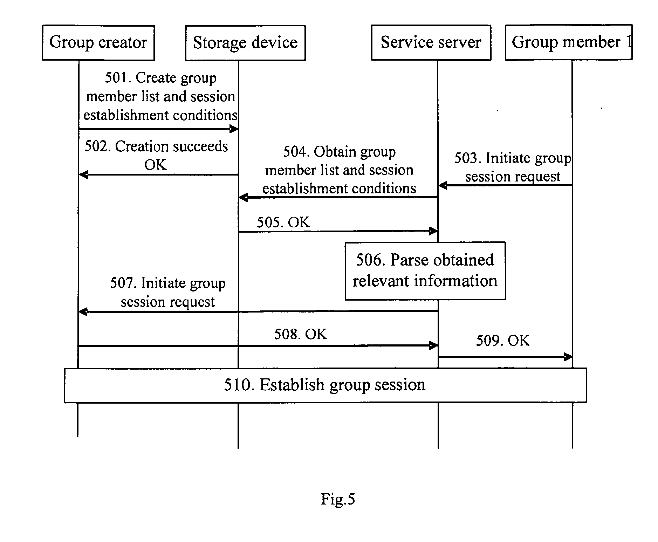

As illustrated in Figure 5, a flow of the method for establishing a group session is as follows.

Step 501: A group creator creates a group member list and session establishment conditions through a storage device client of a user equipment, and stores the group member list and session establishment conditions on a corresponding storage device through the XCAP or Hypertext Transfer Protocol (HTTP).

The session establishment conditions may be a set of conditions including static conditions, dynamic conditions, time-dependent conditions, Quality of Experience (QoE) conditions, etc. A static condition indicates the condition formed from static information of a group member, and the static information includes the name, gender, contact address, alias, birthday, communication capabilities, hobbies, etc., of the group member. A dynamic condition indicates the condition formed from current status information of a group member, and the dynamic information includes presence information, location information, etc., where the presence information may include information on the current activity engaged, time zone, mood of the group member, information on whether the group member has participated in another session, and an identifier of the service equipment, etc, and the location information may include information on the current geographical location, the maximum distance, etc., of the group member. The time-dependent condition, i.e., a condition formed from information of a time period, date, etc., indicates a period of time in which a group session is initiated. The QoE condition indicates a session quality experienced by a group member during the group session, and the session quality is classified into four levels, i.e. Basic, Professional, Crisis and Official Government Use. The session establishment conditions are not limited to the above information and may also include condition information for relating to other service server.

Furthermore, the session establishment conditions may also contain a constraint of the lowest number of members for establishment of a group session, i.e. a constraint of the lowest number of members to participate in the group session. A group session may not be established if group members satisfying the session establishment conditions do not reach the lowest number.

The session establishment conditions may exist as either part of the group member list or a separate file. When the session establishment conditions exist as a separate file, a reference to the file of the session establishment conditions is required in the group member list. For example, when both the group member list and the session establishment conditions are implemented in the form of XML, a group member list for a group identified by sip:chatgroup@poc.com may contain the following reference to the session establishment conditions:

```
         <condition-ref>http://xcap.example.com/services/org.ietf.grouprules/user/sip:chatgr
 oup@poc.com/grouprules</condition-ref>
```

The above contents of the reference indicate a path to access the file of session establishment conditions, and the path is constructed under a rule following a method for constructing an XCAP Uniform Resource Identifier (URI).

An example of the file of session establishment conditions described in the XML form is as follows.

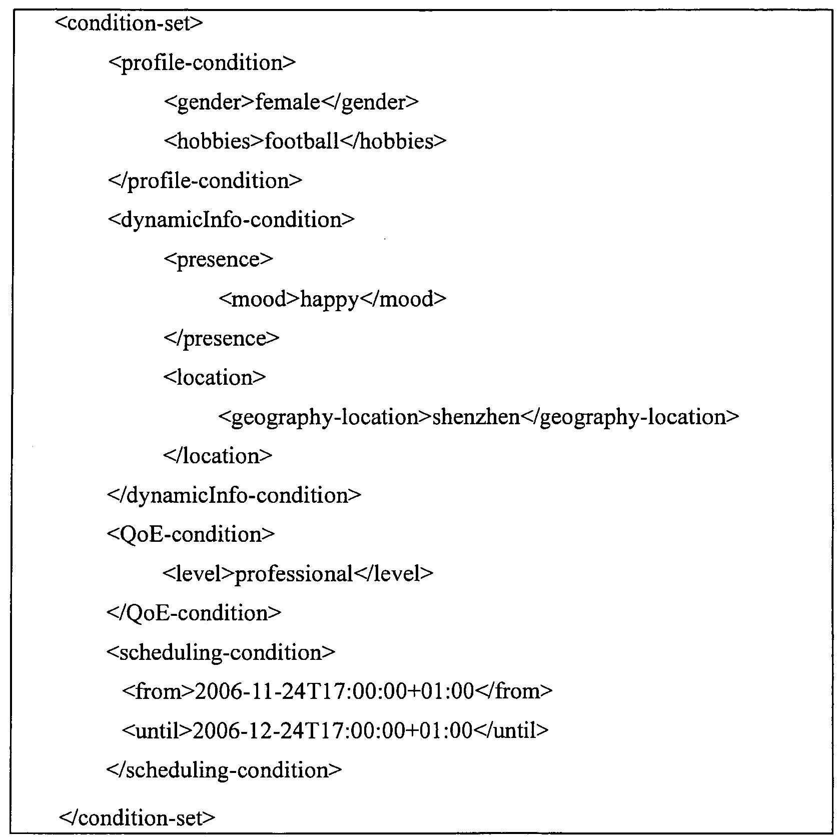

The above example illustrates a session establishment condition file in which the element <condition-set> is a root element indicating a set of conditions containing four sub-elements: <profile-condition>, <dynamicInfo-condition>, <QoE-condition> and <scheduling-condition>. The <profile-condition> indicates static conditions, and in correspondence with the above static information, may contain sub-elements such as <name>, <gender>, <hobbies>, <alias>, <birthday>, etc., corresponding respectively to the information of a name, gender, hobbies, an alias, birthday, etc., and the descriptions in the above example shows that a group member to participate in a group session is required to be "a female with a hobby of football". The <dynamicInfo-condition> indicates dynamic conditions, and in correspondence with the above dynamic information, may contain two sub-elements: <presence> and <location>, where the <presence> indicates current status information and may contain sub-elements such as <activity> and <mood> indicating current status such as the current activity engaged and mood respectively, and in the above example, the current mood status of the group member to participate in the group session is required to be "Happy"; the <location> indicates the current location and the maximum distance of the group member to participate in the group session and may include two sub-elements: <geography-location> and <distance>, and in the above example, the location of the group member to participate in the group session is required to be "Shenzhen". The <QoE-condition> indicates a QoE level of the group member to participate in the group session and may include a sub-element <level> indicating the QoE level, and in the above example, the QoE level of the group member to participate in the group session is required to be the "Profession" level. The <scheduling-condition> indicates a period of time in which the group session may be initiated, and may include two elements: <from> and <until>, indicating a start time and an end time of the valid period of time respectively.

Step 502: If the group member list and session establishment conditions are stored successfully, the storage device returns an OK response; otherwise, returns a failure response.

Step 503: A first group member, which may be a group creator or an authorized group member in the group, initiates a group session request containing the identifier of the group to the service server through the user equipment.

Step 504: The service server initiates a request for obtaining the member list and the session establishment conditions to the storage device according to the information contained in the request.

Step 505: If the member list and the session establishment conditions are obtained successfully, the storage device returns an OK response to the service server and sends to the service server the contents requested for by the service server as the body of the OK response message.

Step 506: The service server obtains information related to the session establishment conditions of a group member, and the information refers to the set of dynamic information and static information indicated by the session establishment conditions. For example, the relevant information of the gender condition <gender>female</gender> is the gender, i.e., <gender>.

Step 507: The service server initiates a group session establishment request to those group members satisfying the session establishment conditions by means of an INVITE method of the SIP protocol.

Step 508: A group member satisfying the session establishment conditions (the group creator) agrees on the invitation from the group session initiator and returns a success response OK to the service server.

Step 509: Upon receiving the returned success response, the service server returns a success response to the group session initiator (the group member 1).

Step 510: The service server establishes successfully a group session between the group creator and the group session initiator (the group member 1).

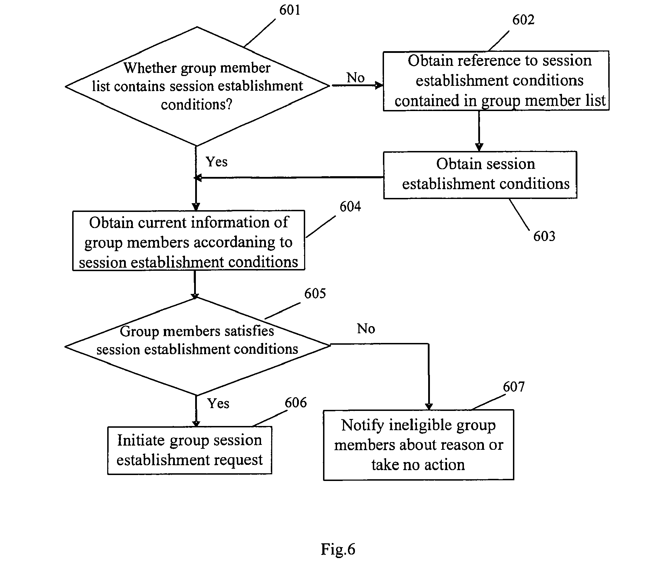

As shown in Figure 6, a flow in which a service server obtains information related to session establishment conditions of a group member and determines whether the current status of the group member satisfies session establishment conditions is as follows.

Step 601: The service server determines whether an obtained group member list contains session establishment conditions, and if the obtained group member list contains no session establishment condition, the flow proceeds with Step 602, otherwise, the flow proceeds with Step 604.

Step 602: The service server obtains a reference to the session establishment conditions contained in the group member list.

Step 603: The service server initiates a request for obtaining the session establishment conditions to the storage device via the XCAP or HTTP protocol according to the reference to the session establishment conditions in the group member list.

Step 604: The service server obtains from the group member list the relevant information indicated by the session establishment conditions of the group member.

The way in which the service server obtains the relevant information of the group members is dependent on the type of condition information.

For a static condition, the service server may obtain the information from the existing information stored in the storage device through a query. In a system in which an XDMS is used as the storage device, the service server may query for static information of a group member on the XDMS (a shared XDMS) by combining the XCAP protocol and the Xpath language. For example, for a group member with an identifier of sip:myfriend@example.com, the service server may obtain the static information <gender> of the group member from the storage device through the following query statement according to the static condition in the above session establishment condition instance:

```
        http://xcap.example.com/services/org.ietf.sharedxdms/user/sip:myfriend@example.c
 om/sharedprofile/∼ ∼///gender
```

The element <hobbies> may be queried for in the same way as that queried for the element <gender>.

For a system in which a database is used as the storage device, the service server may simply query for static information of a group member with a Structured Query Language (SQL) query statement. In the case of a QoE condition, typically the QoE is also static information and may be stored in an XDMS or database as a property of a group member together with other static information of the group member, and therefore the information of QoE may be obtained in the same way as that for the static information.

For a dynamic condition, the service server needs to obtain it from a presence service server and a location service server. To obtain presence information of a group member in the group member list, the service server is required to subscribe for presence information of the group member from the presence service server, and the service server may subscribe for presence information of each group member in the group member list from the presence service server via a SUBSCRIBE method of the SIP protocol by using the identifier of the group creator, i.e. the SIP URI of the group creator. The subscription may be a one-time or long-term subscription.

In the case of a long-term subscription, a validity period for the subscription may be the maximum value of a subscription validity period (7200 seconds), and a filter may be provided in a subscription message to subscribe for only the contents indicated by the session establishment conditions. Upon success of the subscription, the presence service server notifies the service server about the current status of a subscribed group member via a NOTIFY method of the SIP protocol. At the end of a group session, or upon failure of establishing a group session, if the subscription is still valid, the service server may send a SUBSCRIBE message with a header field of validity period being zero to cancel the subscription for the presence information of all the group members. If the subscription is invalidated during the group session, the service server may send a subscription request again for updating the subscription. Likewise, location information may be obtained via a subscription-and-notification manner.

In the case of a one-time subscription, a validity period for the subscription is set to be zero, and a filter may also be provided in a subscription message to subscribe for only the contents indicated by the session establishment conditions. Upon success of the subscription, the presence service server notifies the service server about the current status of a subscribed group member via a NOTIFY method of the SIP protocol. However, due to the one-time subscription, the service server receives no more notification when the presence information of the group member is changed; in addition, the service server needs no operation of canceling the subscription and the like.

Step 605: The service server determines whether the relevant information of the group members satisfies the conditions for joining a group session. The obtained relevant information of each group member is compared with the session establishment conditions, and if all the relevant information of the group member satisfies the session establishment conditions, the flow proceeds with Step 606; and if a piece of information is not compatible with the session establishment conditions during the comparison, the remaining information needs no more comparison, and the flow proceeds with Step 607.

Step 606: The service server initiates a group session establishment request to those group members satisfying the session establishment conditions via an INVITE method of the SIP protocol.

Step 607: For any group member not satisfying the session establishment conditions, no further action is taken, or alternatively a notification in an SIP message or a short message may be sent to notify the group member about a reason for not being invited to the group session.

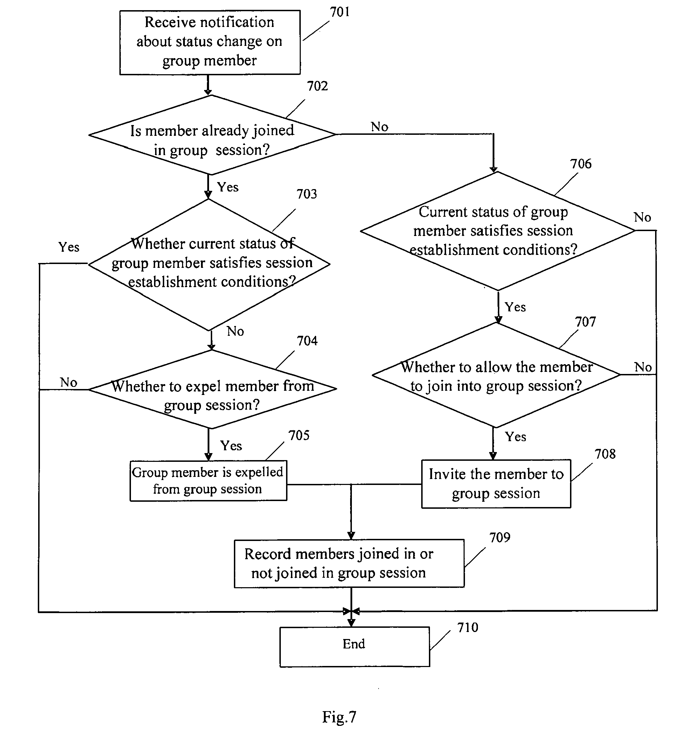

As shown in Figure 7, after a group session is established successfully, if a service server receives during a group session a notification about a change on the current status of a second group member (including a notification due to a change on the presence status or location status of a second group member or due to a change on static information of the second group member in the storage device), for example, a change on the status <mood> of the second group member from Happy to Unhappy, a process flow of the service server may be as follows.

Step 701: The service server receives a notification about a change on the status of the second group member.

Step 702: The service server determines whether the second group member has joined the group session. If the second group member has joined the group session, the flow proceeds to Step 703; otherwise the flow proceeds to Step 706.

Step 703: It is determined whether the current status of the second group member satisfies the session establishment conditions. If the current status of the second group member satisfies the session establishment conditions, the flow proceeds to Step 710; otherwise the flow proceeds to Step 704.

Step 704: It is determined whether to expel the group member from the group session according to group session policies established by the group creator. If the group member is to be expelled from the group session, the flow proceeds to Step 705. If the group creator has not set this element in creating the group, the element has a default value of Not-expel, and the flow proceeds to step 710.

Particularly, the group session policies are a set of conditions and actions, and represent authorization policies for the group. Each policy may not include any rule, or include a plurality of rules, and each rule is comprised of a condition sub-item and an action sub-item. Relevant control policies are necessary to be added to enable functions of controlling a group member to participate and quit from the group session during the group session. The control polices contain descriptions of processes taken upon a change on the status of a group member during a group session, and are set by the group creator in creating the group. The following two aspects of contents may be added to a file of the group session policies: (1) for a group member who has joined the group session, a policy of whether to expel the group member from the group session upon a change on the status of the group member during the group session is added, for example, a sub-element <expel> having a value of a Boolean variable is added in <action>. When the value is True, a group member who has joined the group session is expelled from the group session if the current status of the group member does not satisfy the session establishment conditions during the session, and when the value is False which is the default value, the group member will not be expelled; (2) for a group member who has not joined the group session, a policy of whether to invite the group member to the group session upon a change on the status of the group member during the group session is added, for example, a sub-element <joined-session> having a value of a Boolean variable is added in <action>. When the value is True, a group member who has not joined the group session is allowed to join into the group session if the current status of the group member satisfies the session establishment conditions during the session, and when the value is False which is the default value, the group member is not allowed to join the session.

Step 705: The second group member is expelled with a BYE method of the SIP protocol and the flow proceeds to Step 709.

Step 706: The current status of the second group member is compared with the session establishment conditions to determine whether the current status of the second group member satisfies the session establishment conditions, and if the current status of the second group member satisfies the session establishment conditions, the flow proceeds to Step 707; otherwise the flow proceeds to Step 710.

Step 707: It is determined whether to allow the second group member to join the group session according to the group polices, and if the group creator has not set this element in creating the group, the default value of this element is to allow the second group member to join the group session, and the flow proceeds to Step 708; otherwise the flow proceeds to Step 710.

Step 708: The second group member is invited to join the group session, in other words, an SIP INVITE request is sent to the second group member.

Step 709: Those members that have joined the group session and those have not joined the group session are recorded.

Step 710: The flow ends.

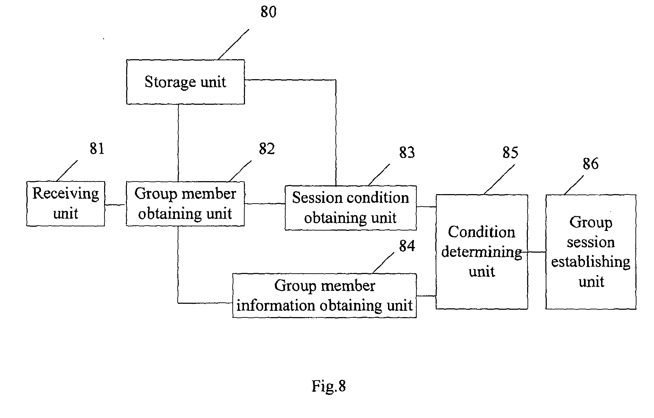

According to an embodiment of the present invention, a service server is further provided, as illustrated in Figure 8, and the service server includes a receiving unit 81, a group member obtaining unit 82, a session condition obtaining unit 83, a group member information obtaining unit 84, a condition determining unit 85 and a group session establishing unit 86.

The receiving unit 81 is adapted to receive a group session request containing an identifier of a group. According to the identifier of the group, the group member obtaining unit 82 obtains a group member list, which may be stored outside the service server, for example, in the storage device 42 shown in Figure 4; or, the group member list may be stored inside the service server.

The session condition obtaining unit 83 then obtains session establishment conditions corresponding to group members in the group member list. Similarly, the session establishment conditions corresponding to the group members may be stored outside the service server together with the group member list; or the session establishment conditions may be stored separately inside the service server, for example, in the storage unit 80 shown in Figure 8. The storage unit 80 may be a database or XDMS.

Both the way in which the group member obtaining unit 82 obtains the group member list and the way in which the session condition obtaining unit 83 obtain the session conditions corresponding to the group members vary with the storage manners. For details, reference can be made to those illustrated with Figure 4 and detailed descriptions are omitted here.

In order to avoid initiating a group session establishment request to a group member with which no group session may be established so as to save recourse, in the embodiments of the present invention, the group member information obtaining unit 84 is adapted to obtain the information indicated by the session establishment conditions of the group members in the group member list. The information includes static information and/or dynamic information and varies with session establishment conditions corresponding to the group members; furthermore, different information may be obtained in different ways, detailed descriptions of which have been stated in the above embodiments.

The condition determining unit 85 then determines weather the relevant information indicated by the session establishment conditions of the group member satisfies the session establishment conditions, in other words, all the obtained relevant information is mapped to each respective piece of information of the session establishment conditions for the group member, and if all the information is in compliance with the information of the session establishment conditions, it is indicated that the group member satisfies the session establishment conditions; otherwise, it is indicated that the group member does not satisfy the session establishment conditions. Then, a determination result is sent to the group session establishing unit 86.

According to the determination result, the group session establishing unit 86 initiates a group session establishment request to those group members satisfying the session establishment conditions and establishes a group session.

The condition determining unit 85 may send a determination result to the group session establishing unit 86 after each determination is performed on a group member, and the determination result is recorded by the group session establishing unit 86, or, the determination result may be recorded by the condition determining unit 85; and after performing the determination for each of the group members in the group member list, the condition determining unit 85 sends the determination results to the group session establishing unit 86. Alternatively, the condition determining unit 85 may send to the group session establishing unit 86 the identifiers of those group members not satisfying the session establishment conditions in addition to those group members satisfying the session establishment conditions. In this way, the group session establishing unit 86 may herby initiate a group session establishment request to only those group members satisfying the session establishment conditions, thereby saving system resources. Furthermore, it is possible to further send to those group members not satisfying the session establishment conditions a message carrying a reason for not sending a group session establishment request to the group members. As seen from the above description, in the embodiments of the present invention, the group creator presets the session establishment conditions, and the service server compares the information of the group members with the session establishment conditions and invites only those group members satisfying the session establishment conditions to the group session; in addition, the service server may obtain a change on status information of a group member during the session, determine whether the group member satisfies or still satisfies the session establishment conditions, and further determine whether to allow the group member to join the session or expel the group member from the session, thereby enabling dynamic control on the group session.

It will be appreciated to those ordinarily skilled in the art that all or part of the steps in the methods according to the embodiments of the present invention may be accomplished by a program instructing the relevant hardware. The program may be stored in a computer readable storage medium, for example, a ROM/RAM, a magnetic disk, a Compact Disc, etc.

Evidently, various modifications and variations to the present invention may be made by those skilled in the art without departing from the spirit and scope of the present invention. Thus, the present invention is intended to encompass all these modifications and variations and equivalents thereof provided that they fall into the scope of the claims appended to the present invention.

## Claims

1. A method for establishing a group session, comprising:
obtaining a group member list and session establishment conditions according to information in a received group session request;
obtaining information indicated by the session establishment conditions;
determining a group member of which the obtained information satisfies the session establishment conditions; and
initiating a group session establishment request to the group member of which the obtained information satisfies the session establishment conditions, and establishing a group session.

2. The method according to claim 1, wherein the step of obtaining the group member list and the session establishment conditions comprises:
querying a pre-created group member information file comprising group members and the session establishment conditions according to a group identifier in the group session request, to obtain the group member list corresponding to the group identifier and the session establishment conditions.

3. The method according to claim 1, wherein the step of obtaining the group member list and the session establishment conditions comprises:
querying a pre-created group member information table comprising group members and a reference to the session establishment conditions corresponding to the group members according to a group identifier in the group session request;
obtaining the group member list corresponding to the group identifier; and
obtaining the session establishment conditions according to the reference to the session establishment conditions.

4. The method according to claim 1, wherein the current information indicated by the session establishment conditions comprises static information and/or dynamic information; the static information is obtained through a query manner; and the dynamic information is obtained through a subscription-and-notification manner.

5. The method according to any one of claims 1 to 4, wherein the step of determining a group member of which the obtained information satisfies the session establishment conditions comprises:
if the obtained information indicated by the session establishment conditions of the group member totally satisfies the session establishment conditions, determining that the group member satisfies the session establishment conditions; otherwise determining that the group member does not satisfy the session establishment conditions.

6. The method according to claim 1, further comprising:
sending to a group member not satisfying the session establishment conditions a message carrying a reason for not sending a group session establishment request to the group member.

7. The method according to claim 1, further comprising:
determining whether to allow a group member with a changed status to join the group session or expel the group member with a changed status from the group session according to preset group session policies and the obtained relevant information of the group member during the group session.

8. The method according to claim 7, wherein:
the change on the relevant information of the group member is obtained through subscription and notification; or
the change on the relevant information of the group member is obtained in a polling manner.

9. A system for establishing a group session, comprising a storage device, a service server and a condition determining device; wherein the storage device is adapted to store a group member list and session establishment conditions; the service server is adapted to receive a group session establishment request, obtain the group member list and the session establishment conditions from the storage device according to the session request, and establish a group session for a group member satisfying the session establishment conditions according to a determination result on relevant information of the group member sent by the condition determining device; and the condition determining device is adapted to obtain the information indicated by the session establishment conditions of the group member according to the session establishment conditions, determine whether the information satisfies the session establishment conditions, and return the determination result to the service server.

10. The system according to claim 10, further comprising:
a client adapted to send to the service server the group session establishment request, execute operations of the group session, and send the group member list and the session establishment conditions to the storage device.

11. The system according to claim 10, wherein the client comprises a storage device client and a service client; wherein the storage device client is adapted to create the group member list and the session establishment conditions, and send the group member list and the session establishment conditions to the storage device for storage; and the service client is adapted to send the group session establishment request to the service server and execute the operations of the group session.

12. The system according to claim 9 or 10, further comprising:
a session establishment condition storage device adapted to store the session establishment conditions sent by the client, wherein the session condition storage device exists in the storage device, or exists as a separate device.

13. The system of claim 9 or 10, wherein the condition determining device exists in the service server, or exists as a separate device.

14. A service server comprising:
a receiving unit adapted to receive a group session request comprising a group identifier;
a group member obtaining unit adapted to obtain a group member list according to the group identifier;
a group session establishing unit adapted to initiate a group session establishment request to a group member and establish a group session;
wherein the service server further comprises:
a session condition obtaining unit adapted to obtain session establishment conditions corresponding to group members in the group member list; and
a group member information obtaining unit adapted to obtain information indicated by the session establishment conditions of the group members in the group member list.

15. The service server of claim 14, further comprising:
a condition determining unit adapted to determine whether the information of the group members satisfies the session establishment conditions, and send a determination result to the group session establishing unit.

16. The service server according to claim 14 or 15, further comprising:
a storage unit adapted to store the session establishment conditions corresponding to the group members

17. The service server according to claim 16, wherein the storage unit is a database or XML Document Management Server, XDMS.
